# EUROPEAN PATENT APPLICATION

(11) **EP 3 889 051 A1**
(43) Date of publication of application: **06.10.2021**
(21) Application number: 18941714.0
(22) Date of filing: 30.11.2018
(51) Int. Cl.: B64D 45/00, G05D 1/10

(54) **METHOD AND APPARATUS FOR CONTROLLING LIGHT EMITTING MODULE, ELECTRONIC DEVICE, AND STORAGE MEDIUM**

(71) Applicant: SZ DJI Technology Co., Ltd., Shenzhen, Guangdong 518057 (CN)
(72) Inventor: CHEN, Xiangyu, Shenzhen, Guangdong 518057 (CN); WANG, Junyu, Shenzhen, Guangdong 518057 (CN); GAO, Shijing, Shenzhen, Guangdong 518057 (CN)
(74) Representative: Goddar, Heinz J.
(86) International application number: PCT/CN2018/118724
(87) International publication number: WO 2020/107461

(57) **Abstract**

The present disclosure discloses method and device for controlling a light emitting module, an electronic device, a UAV light emitting system, and a computer-readable storage medium, the light emitting module being installed on a movable platform. The technical solution includes determining a controlled state of the movable platform based on a received remote control signal; obtaining a light control instruction with a highest priority based on priorities of different signal sources configured corresponding to the controlled state, the signal source being used to initiate the light control instruction for controlling the light emitting module; and controlling a light emitting state of the light emitting module by executing the light control instruction with the highest priority. The technical solution provided by the present disclosure can flexibly control the light emitting state of the conventional light emitting module.

## Description

### TECHNICAL FIELD

The present disclosure relates to the technical field of unmanned aerial vehicles and, more specifically, to a method and device for controlling a light emitting module, a movable platform, a light emitting system of an unmanned aerial vehicle (UAV), and a computer-readable storage medium.

### BACKGROUND

An unmanned aerial vehicle (UAV) is an unmanned aircraft operated by a radio remote control device and a self-provided program control device. UAVs are widely used, mainly divided into civilian use and military use. For civilian use, UAVs can undertake power inspections, especially with advantages over human in areas with difficult conditions, UAVs can also perform environmental monitoring, aerial photography of film and television dramas, mailing of small items, geographic mapping, and auxiliary post-disaster rescue, etc.

During night flight, in order to indicate own position and movement direction, it is needed to install signal lights, that is, night flight lights that can facilitate mutual avoidance and identification. At present, as long as the UAV is flying at night, the night flight lights are always on. When using the UAV's imaging function, due to the high brightness of the night flight lights, the images captured by the UAV will generally be overexposed, which will affect the imaging capturing effect. Therefore, the use of night flight lights can seriously affect the imaging function of the UAV. However, if the night flight lights are turned off randomly, collision may occur during night flight with safety risks.

As such, conventional night flight lights of the UAV cannot be flexibly controlled, which can affect imaging quality or flight safety.

### SUMMARY

In order to solve the problems that the night flight lights of the UAV cannot be flexibly controlled in conventional technology, the present disclosure provides a method for controlling a light emitting module.

In a first aspect, the present disclosure provides a method for controlling a light emitting module, which is installed on a movable platform. The method includes determining a controlled state of the movable platform based on a received remote control signal; obtaining a light control instruction with a highest priority based on priorities of different signal sources configured corresponding to the controlled state, the signal source being used to initiate the light control instruction for controlling the light emitting module; and controlling a light emitting state of the light emitting module by executing the light control instruction with the highest priority.

In a second aspect, the present disclosure provides an electronic device. The electronic device includes a processor; and a memory for storing instructions executable by the processor. The processor is configured to determine a controlled state of a movable platform based on a received remote control signal, a light emitting module being installed on the movable platform; obtain a light control instruction with a highest priority based on priorities of different signal sources configured corresponding to the controlled state, the signal source being used to initiate the light control instruction for controlling the light emitting module; and control a light emitting state of the light emitting module by executing the light control instruction with the highest priority.

In a third aspect, the present disclosure provides a movable platform including the electronic device provided by the present disclosure.

In a fourth aspect, the present disclosure provides a UAV light emitting system including a light emitting control module, and a light emitting module, a camera module, and a safety control module connected to the light emitting control module. The safety control module is configured to determine a controlled state of the UAV based on a received remote control signal; and when the UAV is in an uncontrolled state, sending a light control instruction instructing to turn on a light to the light emitting control module. The camera module is configured to send the light control instruction in response to receiving an imaging instruction, and send the light control instruction instructing to restore the light to the light emitting control module in response to receiving an imaging ending instruction. The light emitting control module is configured to control a light emitting state of the light emitting module based on the light control instruction sent by the safety control module when the UAV is in the uncontrolled state, and control the light emitting state of the light emitting module based on the light control instruction sent by the camera module when the UAV is in a controlled state.

In a fifth aspect, the present disclosure provides a device for controlling a light emitting module. The device for controlling the light emitting module is installed on a movable platform, and the control device includes a controlled state determination module configured to determine a controlled state of the movable platform based on a received remote control signal; a control instruction acquisition module configured to obtain a light control instruction with a highest priority based on priorities of different signal sources configured corresponding to the controlled state, the signal source being used to initiate the light control instruction for controlling the light emitting module; and a light emitting module control module configured to control a light emitting state of the light emitting module by executing the light control instruction with the highest priority.

In a sixth aspect, the present disclosure provides a computer-readable storage medium including a computer program stored in the computer-readable storage medium, the computer program being executable by a processor to complete the method for controlling the light emitting module provided by the present disclosure.

The technical solutions provided by the embodiments of the present disclosure may include the following beneficial effects. The technical solutions provided by the present disclosure can configure the priorities of different signal sources based on the controlled state of the movable platform, and control the light emitting state of the light emitting module by executing the light control instruction of the signal source with the highest priority. Therefore, when the movable platform is in a controlled state and an uncontrolled state, the light control instruction of the signal source with the highest priority can be configured based on the controlled state to realize the flexible control of the light emitting state of the light emitting module.

It should be understood that the above general description and the following detailed descriptions are merely exemplary and explanatory, and cannot limit the present disclosure.

### BRIEF DESCRIPTION OF THE DRAWINGS

The drawings here are incorporated into the specification and constitute a part of the specification, illustrate the embodiments in accordance with the present disclosure, and are used together with the specification to explain the principle of the present disclosure.
FIG. 1 is a schematic diagram of an implementation scenario according to an embodiment of the present disclosure.
FIG. 2 is a schematic diagram of an implementation scenario according to another embodiment of the present disclosure.
FIG. 3 is a schematic diagram a structure of a light emitting module 210 shown in FIG. 2.
FIG. 4 is a flowchart of a method for controlling a light emitting module according to an embodiment of the present disclosure.
FIG. 5 is a flowchart of a method for controlling a light emitting module according to another embodiment of the present disclosure.
FIG. 6 is a flowchart of a method for controlling a light emitting module according to yet another embodiment of the present disclosure.
FIG. 7 is a structural block diagram of a UAV light emitting system according to an embodiment the present disclosure.
FIG. 8 is a structural block diagram of the UAV light emitting system according to anther embodiment the present disclosure.
FIG. 9 is a block diagram of a device for controlling a light emitting module according to an embodiment the present disclosure.

### DETAILED DESCRIPTION OF THE EMBODIMENTS

Technical solutions of the present disclosure will be described in detail with reference to the drawings. It will be appreciated that the described embodiments represent some, rather than all, of the embodiments of the present disclosure. Other embodiments conceived or derived by those having ordinary skills in the art based on the described embodiments without inventive efforts should fall within the scope of the present disclosure.

It should be noted that, when one component is referred to as "fixed to" another component, it may be directly on another component or it is also possible that there is a third component between them. When one component is considered to "connect" another component, it may be directly connected to the other component or it is possible that there is a third component between them.

Unless otherwise defined, all the technical and scientific terms used in the present disclosure have the same or similar meanings as generally understood by one of ordinary skill in the art. As described in the present disclosure, the terms used in the specification of the present disclosure are intended to describe example embodiments, instead of limiting the present disclosure. The term "and/or" as used herein includes any and all combinations of one or more related listed items.

Exemplary embodiments will be described with reference to the accompanying drawings. In the case where there is no conflict between the exemplary embodiments, the features of the following embodiments and examples may be combined with each other.

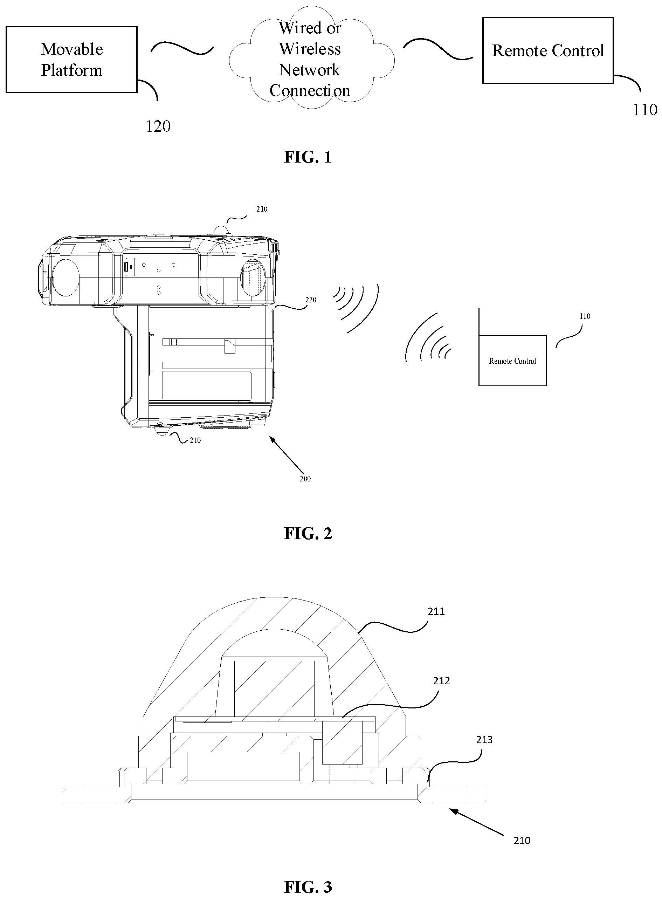

FIG. 1 is a schematic diagram of an implementation scenario according to an embodiment of the present disclosure. As shown in FIG. 1, the implementation scenario includes a remote controller 110 and movable platform 120. The remote controller 110 may be used to control the movable platform 120 in response to an operation instruction. The remote controller 110 may be connected to the movable platform 120 through a wired or wireless connection, and the movable platform 120 may be an unmanned aerial vehicle (UAV for short), an unmanned vehicle, an unmanned ship, or the like. The remote controller 110 may be a smart phone, a gamepad, or the like.

A light emitting module may be disposed on the movable platform 120, and the movable platform 120 may use the method provided by the present disclosure to control the light emitting state of the light emitting module. For example, it can control the light switch, light brightness, and blinking frequency of the light emitting module, thereby playing a better role in avoidance and identification. Based on the needs, the light emitting module may also be used for lighting.

FIG. 2 is a schematic diagram of an implementation scenario according to another embodiment of the present disclosure. As shown in FIG. 2, the implementation scenario includes the remote controller 110, and a UAV 200 with a light emitting module 210 installed. The light emitting module 210 may be installed above and below the shell of a body 220 of the UAV 200, respectively, thereby playing a better role in avoidance and identification, and can be used as a night flight light. Based on the needs, the light emitting module 210 may also be used for lighting. The remote controller 110 can be used to send a control instruction to the UAV 200 to control the flight state of the UAV 200. The UAV 200 may use the light emitting module 210 control method provided by the present disclosure to flexibly control the light emitting state of the light emitting module 210 on the drone. In the controlled and uncontrolled state, the control authority of different signal sources may be turned on, thereby realizing the flexible control of the light emitting module 210. In this way, while ensuring flight safety as much as possible, the influence of the light emitting module 210 on the imaging function of the UAV 200 can be avoided.

FIG. 3 is a schematic diagram a structure of the light emitting module 210 shown in FIG. 2. As shown in FIG. 3, the light emitting module 210 includes a lampshade 211, a hardware board 212, and a lamp holder 213. The hardware board 212 may be fixed on the lamp holder 213, and the lamp holder 213 may be used to be fixed to the body 220 of the UAV 200. The lampshade 211 may be configured to cover the hardware board 212 and fixed on the lamp holder 213. The hardware board 212 may include a light emitting device, and the method provided by the present disclosure may flexibly adjust the on-off sate, brightness, and blinking frequency of the light emitting device.

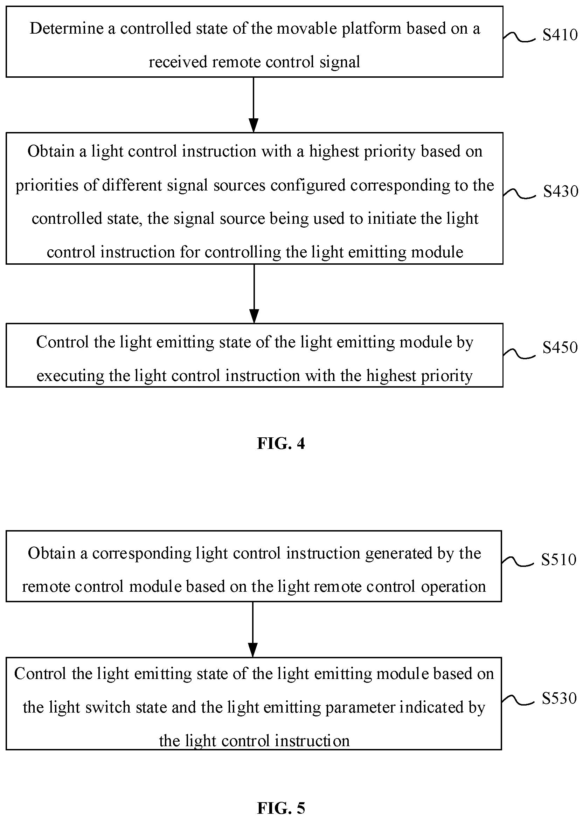

FIG. 4 is a flowchart of a method for controlling a light emitting module according to an embodiment of the present disclosure. The applicable scope and execution subject of the method for controlling the light emitting module may include a movable platform or a computer programing running on the movable platform. The light emitting module may be installed on a movable platform. As shown in FIG. 4, the method for controlling the light emitting module may include the following exemplary processes.

410, determining a controlled state of the movable platform based on a received remote control signal.

The following description uses a UAV as an example of the movable platform. Unmanned vehicles and unmanned ships may refer to the implementation of the UAVs to control the light emitting state of the light emitting module. It should be noted that the remote control can be used to control the flight state of the UAV (including the flight speed, direction, etc.) and to control the UAV to perform imaging functions. The remote control signal may refer to a signal sent by the remote control to the UAV. In one embodiment, the remote control may send a remote control signal to the UAV at regular intervals. If the UAV detects that the remote control signal received regularly is interrupted or the reception is delayed, it can be considered that the UAV is out of control. In one embodiment, the interruption described above may be understood as the UAV not receiving the remote control signal within a predetermined period of time, or receiving an interrupted remote control signal. The reception delay described above may be that the difference between the time information carried in the received remote control signal and the realization information of the UAV itself exceeds the predetermined period of time, or the received remote control signal carries information with a delay mark, etc., which is not limited here. Conversely, if the UAV can regularly receive the remote control signal sent by the remote control, it can be considered that the UAV is in a controlled state.

The controlled state of the UAV may include an uncontrolled state and a controlled state. The uncontrolled state may refer to a disconnection of the remote control and the UAV, and the remote control cannot control the flight state of the UAV. Conversely, the controlled state may refer to a normal connection between the remote control and the UAV, and the remote control can control the flight state of the UAV.

430, obtaining a light control instruction with a highest priority based on priorities of different signal sources configured corresponding to the controlled state, the signal source being used to initiate the light control instruction for controlling the light emitting module.

The signal source may include a camera module and a safety control module. It should be noted that the signal source is not limited to the listed modules, for example, it may also include a remote control module. The signal source may be considered as a computer program running in the UAV, or as an installed hardware module. It should be noted that the light emitting module may refer to a device with a light emitting function installed on the UAV. The light emitting module may include light emitting devices, such as LED lights and lasers. The signal source may initiate a light control instruction to control the light emitting module, and the light control instruction may be used to control the light switch state, light brightness, and blinking frequency. The blinking frequency may refer to the number of light or dark when the light and dark alternately change within a predetermined period of time.

The camera module may initiate a light control instruction to control the light emitting module to turn off the light when receiving an imaging instruction sent by the remote control. At the end of imaging, a light control instruction to control the light emitting module to restore the state before it was turned off may be initiated.

The safety control module may initial a light control instruction to control the light emitting module when it detects that the UAV is out of control. The light control instruction may instruct to turn on the light of the light emitting module, set the brightness to 100 nits, and increase the blinking frequency (e.g., 5 Hz). The specific brightness and blinking frequency values can be adjusted based on actual needs.

The remote control module may also be referred to as an APP (application) module. The remote control module may send a light control remote instruction to the remote control module based on the light remote control operation performed by the user. The remote control module may initiate a light control instruction to control the light emitting module based on the light remote control operation indicated by the light remote control instruction. The light remote control operation may include the operation of activating, deactivating, and setting the brightness and blinking frequency. Correspondingly, the light control instruction may indicate the light switch state, brightness, and blinking frequency. It should be noted that when the UAV is out of control and the connection between the remote control and the UAV is interrupted, the remote control module cannot obtain the light remote control instruction, nor will it initiate the light control instruction.

More specifically, when the UAV is in a controlled state, it may be considered that the probability of UAV collision is low at this time, such that the priority of the camera module can be configured to be the highest. That is, the light control instruction initiated by the camera module may have the highest priority, that is, the camera module may have the highest control authority. Therefore, when the UAV is in a controlled state, the light control instruction of the camera control module with the highest priority may be obtained. Therefore, even if the camera module initiates a light control instruction to instruction to turn off the light or reduce the brightness of the light when capturing images, the light of the light emitting module may be turned off, which will not affect the safety of the UAV flight, and it can also avoid the influence of the light of the light emitting module on the imaging effect.

When the UAV is in the uncontrolled state, it can be considered that the probability of UAV collision is relatively high at this time, therefore, the priority of the safety control module may be configured to be the highest. That is, the light control instruction initiated by the safety control module may have the highest priority, that is, the safety module may have the highest control authority. Therefore, when the UAV is in the uncontrolled state, the light control instruction of the safety control module with the highest priority may be obtained. The light control instruction initiated by the safety control module may include, for example, instructions to turn on the light, set the brightness to 100 nits, and increase the blinking frequency, etc. In one embodiment, in the uncontrolled state, the light emitting module of the UAV may constantly be in a light-on state, and using faster blinking frequency and brighter brightness to remind the surroundings that the UAV is out of control to avoid collisions with the surroundings.

450, controlling the light emitting state of the light emitting module by executing the light control instruction with the highest priority.

In some embodiments, the lighting state may include the switch state, and may also include the brightness and/or blinking frequency. The execution of the light control instruction can be sending the light control instruction to the light emitting module, and the light emitting module's own hardware circuit may control the light-on state, brightness, and/or blinking frequency. For example, when the UAV is in the uncontrolled state, the light control instruction initiated by the safety control module with the highest priority may be executed to control the light emitting module to be in the on state, with a brightness of 100 nits, and a blinking frequency of 5 Hz. It should be noted that the activating state and light-on state described in the present disclosure all mean that the light of the light emitting module is on.

More specifically, when the UAV is in the controlled state, it may execute the light control instruction with the highest priority initiated by the camera module. If the camera module receives an imaging instruction and needs to capture an image, the light control instruction initiated by the camera module may instruct to turn off the light and control the light of the light emitting module to turn off. If the image capturing is complete and the camera module receives an imaging ending instruction, the initiated light control instruction may instruct to restore the light, that is control the light emitting module to restore the switch state, light brightness, and blinking frequency before the light is turned off.

At this time, if the light control instruction initiated by the remote control module is further received, the light emitting state of the light emitting module may be further controlled based on the light control instruction of the remote control module. Therefore, the light emitting state of the light emitting module can be controlled more flexibly.

In conventional technology, the night flight lights are constantly on, and the lighting state of the night flight lights cannot be flexibly controlled, thereby affect the imaging clarity when capturing images. If the night flight lights are turned off at will, there may be safety concerns in night flight, and unable to remind the surroundings to avoid.

The technical solution provided by the above embodiment of the present disclosure configures the priorities of different signal sources based on the controlled state of the movable platform, and then controls the light emitting state of the light emitting module by executing the light control instruction of the signal source with the highest priority. In this way, when the movable platform is in a controlled state or an uncontrolled state, based on the light control instruction of the signal source with the highest priority configured corresponding to the controlled state, flexible control of the light emitting state of the light emitting module can be realized. For example, in the controlled state, the light of the light emitting module can be turned off, thereby achieving a better imaging effect, and the light of the light emitting module can be turned on in the uncontrolled state, thereby serving a higher identification effect.

In one embodiment, the process at 410 described above may include determining that the movable platform is in the uncontrolled state in response to detecting that the remote control signal received regularly is interrupted.

It should be noted that the remote control may send a remote control signal to the UAV at regular intervals (based on a predetermined time interval). If the UAV does not receive the remote control signal within the predetermined time interval, the remote control signal may be considered as being interrupted and the movable platform may be determined to be in the uncontrolled state. In one embodiment, if the remote control signal is not received within the predetermined time interval, and the remote control signal is not received within a period of time after the predetermined time interval, the remote control signal may be considered as being interrupted and the movable platform may be in the uncontrolled state.

In one embodiment, the signal source in the process at 430 may include a safety control module, and the process at 430 may include obtaining the light control instruction with the highest priority generated by the safety control module when the movable platform is in the uncontrolled state, the light control instruction instructing turning on the light.

More specifically, the safety control module of the UAV may be configured to determine the controlled state of the UAV based on the reception of the remote control signal. When the UAV is in the uncontrolled state, the safety control module may have the highest priority, and the light control instruction for the safety control module to control the light emitting module may be obtained. The light control instruction initiated by the safety control module may instruct to turn on the light, such that when the UAV is in the uncontrolled state, the light emitting module of the UAV can be in the lighted state, which serves as an identification and reminds the surroundings to avoid in time.

Based on the foregoing embodiments, the process at 450 may include controlling the brightness and/or blinking frequency of the light emitting module based on a light emitting parameter carried in the light control instruction.

In some embodiments, the light emitting parameter may include the brightness value and/or the blinking frequency value. Therefore, the UAV can control the brightness and blinking frequency of the light emitting module based on the brightness value and/or the blinking frequency value indicated by the light control instruction.

In one embodiment, the signal source in the foregoing process at 430 may include a camera module, and the foregoing process at 430 may include obtaining the light control instruction with the highest priority initiated by the camera module in response to the movable platform being in a controlled state.

It should be noted that when the movable platform is in the controlled state, the camera module may be configured to have the highest priority, that is, the highest control authority. Therefore, when the movable platform is in the controlled state, the light control instruction generated by the camera module may be obtained. The light control instruction may instruct to turn off the light or to restore the light.

Based on the foregoing embodiments, before the foregoing process at 430, the method for controlling the light emitting module provided by the present disclosure may further includes generating the light control instruction instructing to turn off the light in response to receiving an imaging instruction when the movable platform is in the controlled state.

More specifically, when the UAV is in the controlled state, if it receives an imaging instruction sent by the remote control, the camera module of the UAV may generate a light control instruction instructing to turn off the light. When the UAV is in the controlled state, the priority of the camera module may be configured to be the highest, and then light control instruction of the camera module can be obtained as the light control instruction with the highest priority.

Based on the foregoing embodiments, the foregoing process at 450 may include controlling the light of the light emitting module to turn off if the light control instruction instructs to turn off the light.

More specifically, when the UAV is in the controlled state, after the UAV obtains the light control instruction with the highest priority generated by the camera module and instruct to turn off the light, the light control instruction can be sent to the light emitting module, and the light emitting module in the control circuit of the hardware circuit of the light emitting module can be turned off, in other words, disconnect the power to the light emitting device.

Of course, before the foregoing process at 430, the method for controlling the light emitting module provided by the present disclosure may further include generating a light control instruction instructing to restore the light in response to receiving an instruction to end imaging when the movable platform is in the controlled state.

More specifically, when the UAV is in the controlled state, when the camera module of the UAV receives an imaging instruction sent by the remote control, it may generate a light control instruction to turn off the light, and control the light of the light emitting module to turn off, such that the area within the field of view can be imaged. At the end of imaging, the camera module may receive an imaging ending instruction, and generate a light control instruction to instruct to restore the light. In some embodiments, restoring the light may include restoring the light of the light emitting module to the state before it was turned off, or to a specific brightness and blinking frequency.

Based on the foregoing embodiments, the foregoing process at 450 may include controlling the light emitting module to return to the state before the light is turned off in response to the light control instruction instructing to restore the light.

More specifically, when the UAV is in the controlled state, after the camera module of the UAV generates the light control instruction to instruct to restore the light, since the priority of the camera module is configured to be the highest, the light control instruction generated by the camera module to instruct to restore the light may be obtained. Further, the light control instruction instructing to restore the light can be sent to the light emitting module to control the light of the light emitting module to return to the state before turning off, that is, to restore the brightness and blinking frequency before turning off.

In one embodiment, in addition to the camera module, the signal source in the foregoing process at 430 may also include a remote control module. If the light control instruction instructs to restore the light, after controlling the light emitting module to return to the state before the light is turned off, as shown in FIG. 5, the method for controlling the light emitting module provided by the present disclosure may further include the following exemplary processes.

510, obtaining a corresponding light control instruction generated by the remote control module based on the light remote control operation.

It should be noted that when the UAV is in the controlled state, the camera module may have the highest control authority, and the remote control module may have the second highest control authority. That is, regardless of the light control instruction of the remote control module, as long as the camera module generates a light control instruction instructing to turn off the light, the light control instruction will be executed to control the light of the light emitting module to turn off. After the camera module generates a light control instruction instructing to restore the light, it can restore the light emitting module to the state before the light is turned off, and obtain the light control instruction generated by the remote control module to control the light emitting state of the light emitting module.

In some embodiments, the light remote control operation may refer to an operation performed by the user on the remote control, including the switch operation, and the adjustment of brightness and blinking frequency operation. The remote control module may be configured to generate a corresponding light control instruction based on the light remote control operation performed by the user on the remote control. For example, a light-off operation may generate a light control instruction to turn off the light, and a light-on operation may generate a light control instruction to turn on the light. Therefore, during the take-off and landing stages of the UAV, the light of the light emitting module may be controlled by the remote control module to light up, thereby reminding the surroundings to avoid. In the night investigation, the light of the light emitting module may be controlled by the remote control module to turn off, thereby avoiding being discovered by the surroundings and achieving the purpose of flexible control of the light emitting module.

530, controlling the light emitting state of the light emitting module based on the light switch state and the light emitting parameter indicated by the light control instruction.

More specifically, the light control instruction generated by the remote control module may indicate the state of the light switch and the light emitting parameter. In some embodiments, the light switch state may refer to turning on or off the light of the light emitting module, and the light emitting parameter may include the light emitting brightness and blinking frequency. After the camera module instructs to restore the light, it may further send the light control instruction of the remote control module to the light emitting module based on the light control instruction of the remote control module to control the switch state, brightness and blinking frequency of the light emitting module.

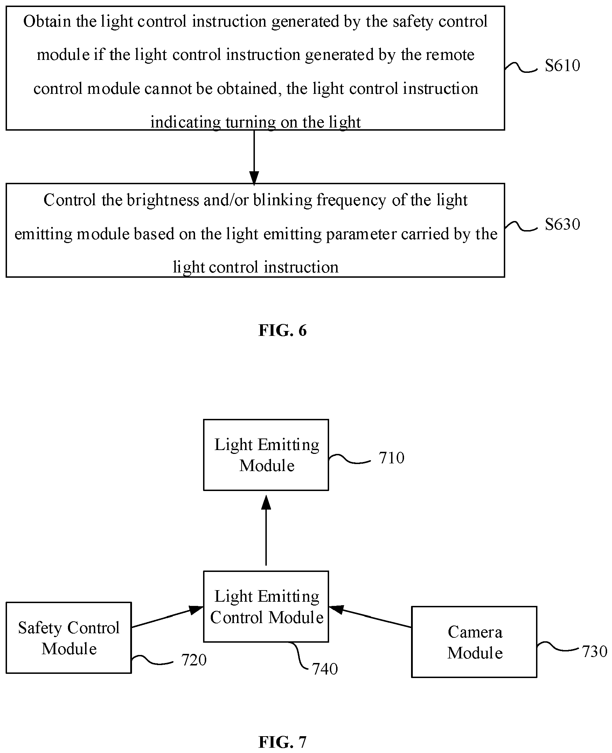

Based on the foregoing embodiments, in addition to the camera module and the remote control module, the signal source in process at 430 may also include a safety control module. As shown in FIG. 6, the method for controlling the light emitting module of the present disclosure may further include the following processes.

610, obtaining the light control instruction generated by the safety control module if the light control instruction generated by the remote control module cannot be obtained, the light control instruction indicating turning on the light.

It should be noted that the signal source may include the camera module, the remote control module, and the safety control module. In some embodiments, when the movable platform is in the uncontrolled state, the safety control module may have the highest priority; and when the movable platform is in the controlled state, the camera module may have the highest priority, the remote control module may have the second priority, and the safety control module may have the lowest priority.

That is, when the UAV is in the uncontrolled state, the safety control module may have the highest control authority, and the light emitting module may light up the light of the light emitting module based on the state, brightness and blinking frequency indicated by the safety control module. When the UAV is in the controlled state, the camera module may have the highest control authority, and the camera module may instruct to turn off the light of the light emitting module, and the camera module may instruct to restore the light to control the light of the light emitting module. After the light is restored, the light emitting state of the light emitting module may be controlled based on the instruction of the remote control module. However, if the user does not control the remote control, that is, there is no light remote control operation, the remote control module will not generate the corresponding light control instruction. Therefore, there may be situations where the remote control module cannot generate the light control instruction.

More specifically, when the remote control module cannot obtain the light control instruction, the light control instruction of the safety control module with the lowest priority, that is the lowest control authority, can be obtained. The light control instruction of the safety control module may constantly instruct to turn on the light, thereby avoiding potential safety hazards caused by randomly turning off the light.

630, controlling the brightness and/or blinking frequency of the light emitting module based on the light emitting parameter carried in the light control instruction.

More specifically, after obtaining the light control instruction of the safety control module, the brightness and/or blinking frequency of the light emitting module may be controlled based on the light emitting parameter indicated by the light control instruction. That is, the brightness of the light emitting module can be adjusted or unadjusted, and the blinking frequency can be adjusted or unadjusted.

In one embodiment, a logic module may be configured to control the light of the light emitting module to be in a constant light-on state, which can play a role in lighting. In one embodiment, the light emitting module may be used as a night flight light, flashing based on a specific brightness, and the effective visual distance may reach five kilometers, thereby playing the role obvious identification, facilitating timely avoidance, and improving the safety of night flights.

The following is an example data packet format of the above light control instruction.

| Field | Size (byte) | Detailed Description |
|---|---|---|
| SOF | 1 | 0xDD |
| Length | 1 | Data length |
| Sender | 1 | Sending module number |
| Receiver | 1 | Receiver module number |
| CMD Type | 1 | 0 : Request |
| | | 1 : Respond |
| | | 2 : No Need To Respond |
| CMD ID | 1 | Instruction number |
| Data | 1-n | Data Segment |
| CRC16 Check | 2 | 16-bit check value from the start byte to the data segment |

In some embodiments, the SOF may represent the header of the data packet of the light control instruction. For example, the header of the data packet of all light control instructions may be OxDD to distinguish it from other control instructions. The Data Segment may carry data such as the on-off state, brightness and blinking frequency of the light emitting module. CMD ID may indicate the number of the light control instruction to distinguish the light control instructions generated sequentially.

FIG. 7 is a light emitting system according to an embodiment the present disclosure. As shown in FIG. 7, the light emitting system includes a light emitting control module 740, a light emitting module 710, a safety control module 720, and a camera module 730 connected to the light emitting control module 740.

The safety control module 720 may be configured to determine the controlled state of the UAV based on the received remote control signal, and send a light control instruction instructing to turn on the light to the light emitting control module 740 when the UAV is in the uncontrolled state.

The camera module 730 may be configured to send a light control instruction instructing to turn off the light to the light emitting control module 740 in response to receiving an imaging instruction, and send a light control instruction instructing to restore the light to the light emitting control module 740 in response to receiving the imaging ending instruction.

The light emitting control module 740 may be configured to control the light emitting state of the light emitting module 710 based on the light control instruction sent by the safety control module 720 when the UAV is in the uncontrolled state, and control the light emitting state of the light emitting module based on the light control instruction sent by the camera module 730 when the UAV is in the controlled state.

In some embodiments, the UAV may also be referred to as an unmanned aerial vehicle. The safety control module 720, camera module 730, and the light emitting module may be implemented by hardware, software, or a combination of both. When implemented by hardware, these modules may be implemented as one or more hardware modules, such as one or more application specific integrated circuits. When implemented by software, these modules may be implemented as one or more computer programs executed by one or more processors. The light emitting module 710 may include a light emitting element and a hardware circuit board, and the hardware circuit board may directly control the on-off, brightness, and blinking frequency of the light emitting element on it based on the light control instructions.

In one embodiment, the safety control module 720 may detect the remote control signal sent by the remote control. If the remote control signal is interrupted, the UAV may be considered as being in the uncontrolled state, and a light control instruction instructing to turn on the light may be send to the light emitting control module 740. When the UAV is in the uncontrolled state, the safety control module 720 may have the highest control authority, and the light emitting control module 740 may send the light control instruction sent by the safety control module 720 to the light emitting module 710. Therefore, the light of the light emitting module 710 can be controlled to light up, and the brightness and blinking frequency of the light can be controlled based on the light emitting parameter carried in the light control instruction.

In another embodiment, the safety control module 720 may detect the remote control sent by the remote control. If the remote control signal is received normally, the UAV may be considered as being in the controlled state. At this time, the camera module 730 may have the highest control authority. If the camera module 730 receives the imaging instruction sent by the remote control, it may send a light control instruction instructing to turn of the light to the light emitting control module 740. The light emitting control module 740 may send the light control instruction instructing to turn of the light to the light emitting module 710, thereby controlling the light of the light emitting module 710 to turn off. At the end of imaging, the camera module 730 may receive the imaging ending instruction, and send a light control instruction instructing to restore the light to the light emitting control module 740. The light emitting control module 740 may send a light control instruction instructing to restore the light to the light emitting module 710, thereby controlling the light of the light emitting module 710 to return to the state before turning off.

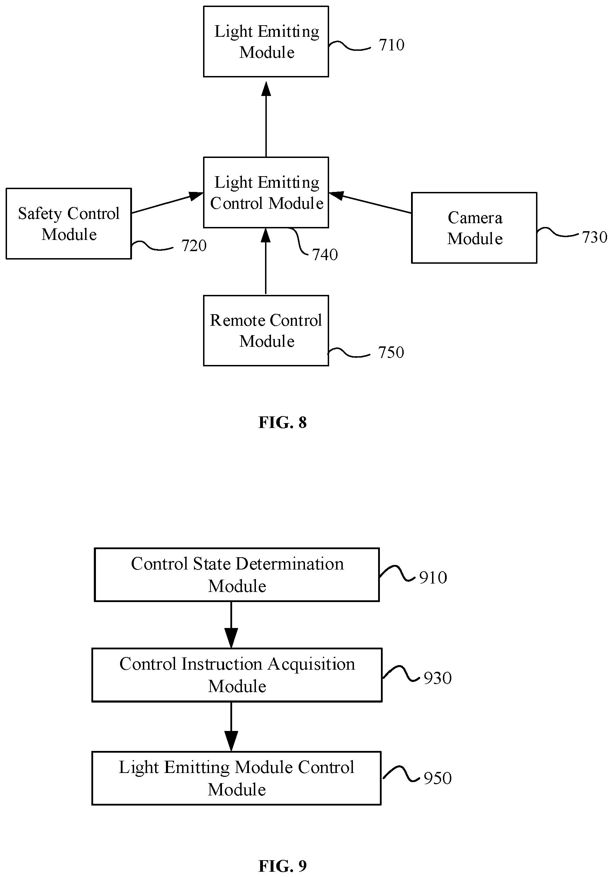

As shown in FIG. 8, the light emitting system of the AUV provided by the embodiments of the present disclosure further includes a remote control module 750 connected to the light emitting control module 740.

The remote control module 750 may be configured to generate the corresponding light control instruction based on the light remote control operation, and send the light control instruction to the light emitting control module 740. The light emitting control module 740 may be further configured to control the light emitting state of the light emitting module 710 based on the light control instruction sent by the remote control module 750 when the light control instruction instructs to restore the light.

Similarly, the remote control module 750 may be implemented by hardware, software, or a combination of both. The remote control module 750 may receive the light remote control operation performed by the user sent by the remote control, generate a corresponding light control instruction based on the light remote control operations, and send the light control instruction to the light emitting control module 740. It should be noted that when the UAV is in the uncontrolled state, the connection between the UAV and the remote control may be interrupted, and the remote control module 750 may not receive the light remote control operation sent by the remote control, such that the remote control module 750 may have no control authority. However, when the UAV is in the controlled state, the remote control module 750 may receive the light remote control operation sent by the remote control, generate a corresponding light control instruction, and send it to the light emitting control module 740.

When the UAV is in the controlled state, the camera module 730 may have the highest control authority, the remote control module 750 may have the second highest control authority, and the safety control module 720 may have the lowest control authority. Therefore, when the UAV is in the controlled state, if the light control instruction sent by the camera module 730 instructs to restore the light, after the light is restored, the light emitting control module 740 may also control the light emitting state of the light emitting module 710 based on the light control instruction sent by the remote control module 750. Therefore, when the UAV is in the controlled state, the user can flexibly control the light emitting state of the light emitting module 710 on the UAV.

For the realization process of the functions and purposes of the light emitting module 710, the safety control module 720, the camera module 730, and the remote control module 750 in the UAV light emitting system described above, reference may be made to the method for controlling the light emitting module provided by the above embodiments of the present disclosure.

The following includes device embodiments of the present disclosure, which can be used to implement the method for controlling the light emitting module executed by the movable platform 120 of the present disclosure described above. For details not disclosed in the device embodiments of the present disclosure, reference may be made to the embodiments of the method for controlling the light emitting module of the present disclosure.

FIG. 9 is a block diagram of a device for controlling a light emitting module according to an embodiment the present disclosure. The device for controlling the light emitting module can be used in the movable platform 120 of the implementation scenario shown in FIG. 1 to execute all or part of the processes of the method for controlling the light emitting module shown in FIG. 4. In some embodiments, the light emitting module may be installed on the movable platform 120. As shown in FIG. 9, the control device includes, but is not limited to, a controlled state determination module 910, a control instruction acquisition module 930, and a light emitting module control module 950.

The controlled state determination module 910 may be configured to determine the controlled state of the movable platform based on the received remote control signal.

The control instruction acquisition module 930 may be configured to obtain the light control instruction with the highest priority based on the priorities of different signal sources configured corresponding to the controlled state, the signal source being used to initiate the light control instruction for controlling the light emitting module.

The light emitting module control module 950 may be configured to control the light emitting state of the light emitting module by executing the light control instruction with the highest priority.

For the implementation process of the functions and purposes of each module in the device described above, reference may be made to the implementation process of the corresponding processes in the method for controlling the light emitting module described above for details, which will not be repeated here.

The controlled state determination module 910, the control instruction acquisition module 930, and the light emitting module control module 950 may be functional modules for executing the corresponding processes in the method for controlling the light emitting module described above. It can be understood that these modules may be implemented by hardware, software, or a combination of both. When implemented by hardware, these modules may be implemented as one or more hardware modules, such as one or more application specific integrated circuits. When implemented by software, these modules may be implemented as one or more computer programs executed by one or more processors, such as the programs stored in the memory executed by the processor.

In one embodiment, the controlled state determination module 910 described above may be configured to determine that the movable platform is in an uncontrolled state in response to detecting that the remote control signal received regularly is interrupted.

In one embodiment, the aforementioned signal source may include a safety control module, and the aforementioned control instruction acquisition module 930 may include, but is not limited to, a safety control unit configured to obtain the light control instruction with the highest priority generated by the safety control module when the movable platform is in the uncontrolled state, the light control instruction instructing to turn of the light.

In one embodiment, the light emitting module control module 950 may include, but is not limited to, a light adjusting unit configured to control the brightness and/or blinking frequency of the light emitting module based on the light emitting parameter carried in the light control instruction.

In one embodiment, the aforementioned signal source may include a camera module, and the aforementioned control instruction acquisition module 930 may include, but is not limited to, a camera control unit configured to obtain the light control instruction with the highest priority generated by the camera module when the movable platform is in the controlled state.

In one embodiment, the device for controlling the light emitting module provided by the present disclosure may include, but is not limited to, a showdown instruction generation module configured to generate alight control instruction instructing to turn off the light if an imaging instruction is received when the movable platform is in the controlled state.

In one embodiment, the aforementioned light emitting module control module 950 may include, but is not limited to, a light-off unit configured to control the light of the light emitting module to turn off if the light control instruction instructs to turn off the light.

In one embodiment, the device for controlling the light emitting module provided by the present disclosure may include, but is not limited to, a restoration instruction generation module configured to generate a light control instruction instructing the restoration of the light when the movable platform is in the controlled state if an imaging ending instruction is received.

In one embodiment, the aforementioned light emitting module control module 950 may include, but is not limited to, a light restoration unit configured to control the light emitting module to restore the state before the light is turned off if the light control instruction instructs to restore the light.

In one embodiment, the aforementioned signal source may also include a remote control module. The device for controlling the light emitting module provided by the present disclosure may include, but is not limited to, a remote control instruction acquisition module configured to obtain the corresponding light control instruction generated by the remote control module based on the light remote control operation; and a light emitting control module configured to control the lighting state of the light emitting module based on the light switch state and the light emitting parameter indicated by the light control instruction.

In one embodiment, the aforementioned signal source may further include a safety control module. The device for controlling the light emitting module provided by the present disclosure may also include, but is not limited to, a safety instruction acquisition module configured to obtain the light control instruction generated by the safety control module if the light control instruction generated by the remote control module cannot be obtained, the light control instruction instructing to turn on the light; and a light adjustment module configured to control the brightness and/or blinking frequency of the light emitting module based on the light emitting parameter carried in the light control instruction.

In one embodiment, the signal source may include the safety control module, the remote control module, and the camera module.

When the movable platform is in the uncontrolled state, the safety control module may have the highest priority.

When the movable platform is in the controlled state, the camera module may have the highest priority, the remote control module may have the second priority, and the safety control module may have the lowest priority.

On the other hand, the present disclosure also provides an electronic device. The electronic device can be used in the movable platform 120 of the implementation scenario shown in FIG. 1 to execute all of part of the processes of the method for controlling the light emitting module shown in FIG. 4. The electronic device may include a processor and a memory for storing instructions executable by the processor. In some embodiments, the processor may be configured to execute the method for controlling the light emitting module described in the above embodiments.

The execution process of the processor is detailed in the implementation process of the corresponding processes in the method for controlling the light emitting module described above, which will not be repeated here.

In addition, the present disclosure also provides a movable platform equipped with a light emitting module, and the movable platform may include the electronic device described above. The processor of the electronic device may execute the method provided in the foregoing embodiments of the present disclosure to control the light emitting state of the light emitting module. The movable platform may be a UAV, an unmanned vehicle, or an unmanned ship.

On the other hand, the present disclosure also provides a storage medium. The storage medium may be a computer-readable storage medium, for example, it may be a temporary and non-transitory computer-readable storage medium including instructions. The storage medium may store a computer program, and the computer program may be executed by a processor to complete the method for controlling the light emitting module.

It is to be understood that the present disclosure is not limited to the precise structures that have been described above and illustrated in the drawings, and various modifications and changes can be made without departing from the scope. The scope of the invention is limited only by the following claims.

## Claims

1. A method for controlling the light emitting module, the light emitting module being installed on a movable platform, comprising:
determining a controlled state of the movable platform based on a received remote control signal;
obtaining a light control instruction with a highest priority based on priorities of different signal sources configured corresponding to the controlled state, the signal source being used to initiate the light control instruction for controlling the light emitting module; and
controlling a light emitting state of the light emitting module by executing the light control instruction with the highest priority.

2. The method of claim 1, wherein determining the controlled state of the movable platform based on the received remote control signal includes:
determining the movable platform is in an uncontrolled state in response to detecting the remote control signal received regularly is interrupted.

3. The method of claim 1, wherein:
the signal source includes a safety control module, and
obtaining the light control instruction with the highest priority based on the priorities of different signal sources configured corresponding to the controlled state includes:
obtaining the light control instruction generated by the safety control module with the highest priority when the movable platform is in the uncontrolled state, the light control instruction indicating to turn on a light.

4. The method of claim 3, wherein controlling the light emitting state of the light emitting module by executing the light control instruction with the highest priority includes:
controlling a brightness and/or a blinking frequency based on a light emitting parameter carried in the light control instruction.

5. The method of claim 1, wherein:
the signal source includes a camera module; and
obtaining the light control instruction with the highest priority based on the priorities of different signal sources configured corresponding to the controlled state includes:
obtaining the light control instruction with the highest priority generated by the camera module when the movable platform is in a controlled state.

6. The method of claim 5, when the movable platform is in the controlled state, before obtaining the light control instruction with the highest priority generated by the camera module, further including:
generating light control instruction instructing to turn off the light in response to receiving an imaging instruction when the movable platform is in the controlled state.

7. The method of claim 6, wherein controlling the light emitting state of the light emitting module by executing the light control instruction with the highest priority includes:
controlling to turn off light of the light emitting module if the light control instruction instructs to turn off the light.

8. The method of claim 5, wherein when the movable platform is in the controlled state, before obtaining the light control instruction with the highest priority generated by the camera module, further includes:
generating light control instruction instructing to restore the light in response to receiving an imaging ending instruction when the movable platform is in the controlled state.

9. The method of claim 8, wherein controlling the light emitting state of the light emitting module by executing the light control instruction with the highest priority includes:
controlling the light emitting module to return to a state before the light is turned off if the light control instruction instructs to restore the light.

10. The method of claim 9, wherein:
the signal source further includes a remote control module; and
if the light control instruction instructs to restore the light, after controlling the light emitting module to return to the state before the light is turned off, the method further includes:
obtaining a corresponding light control instruction generated by the remote control module based on a light remote control operation; and
controlling the light emitting state of the light emitting module based on a light switch state and the light emitting parameter indicated by the light control instruction.

11. The method of claim 10, wherein:
the signal source further includes a safety control module; and the method further includes:
obtaining the light control instruction generated by the safety control module if the light control instruction generated by the remote control module is unable to obtain, the light control instruction instructing to turn on the light; and
controlling a brightness and/or a blinking frequency of the light emitting module based on the light emitting parameter carried in the light control instruction.

12. The method of claim 1, wherein:
the signal source includes a safety control module, a remote control module, and a camera module;
the safety control module has a highest priority when the movable platform is in the uncontrolled state; and
the camera module has a highest priority, the remote control module has a second priority, and the safety control module has a lowest priority when the movable platform is in the controlled state.

13. An electronic device comprising:
a processor; and
a memory for storing instructions executable by the processor, wherein the processor is configured to perform:
determining a controlled state of a movable platform based on a received remote control signal, a light emitting module being installed on the movable platform;
obtaining a light control instruction with a highest priority based on priorities of different signal sources configured corresponding to the controlled state, the signal source being used to initiate the light control instruction for controlling the light emitting module; and
controlling a light emitting state of the light emitting module by executing the light control instruction with the highest priority.

14. The electronic device of claim 13, wherein determining the controlled state of the movable platform based on the received remote control signal includes:
determining the movable platform is in an uncontrolled state in response to detecting the remote control signal received regularly is interrupted.

15. The electronic device of claim 13, wherein:
the signal source includes a safety control module, and
obtaining the light control instruction with the highest priority based on the priorities of different signal sources configured corresponding to the controlled state includes:
obtaining the light control instruction generated by the safety control module with the highest priority when the movable platform is in the uncontrolled state, the light control instruction indicating to turn on a light.

16. The electronic device of claim 15, wherein controlling the light emitting state of the light emitting module by executing the light control instruction with the highest priority includes:
controlling a brightness and/or a blinking frequency based on a light emitting parameter carried in the light control instruction.

17. The electronic device of claim 13, wherein:
the signal source includes a camera module; and
obtaining the light control instruction with the highest priority based on the priorities of different signal sources configured corresponding to the controlled state includes:
obtaining the light control instruction with the highest priority generated by the camera module when the movable platform is in a controlled state.

18. The electronic device of claim 17, when the movable platform is in the controlled state, before obtaining the light control instruction with the highest priority generated by the camera module, further including:
generating light control instruction instructing to turn off the light in response to receiving an imaging instruction when the movable platform is in the controlled state.

19. The electronic device of claim 18, wherein controlling the light emitting state of the light emitting module by executing the light control instruction with the highest priority includes:
controlling to turn off light of the light emitting module if the light control instruction instructs to turn off the light.

20. The electronic device of claim 17, wherein when the movable platform is in the controlled state, before obtaining the light control instruction with the highest priority generated by the camera module, further includes:
generating light control instruction instructing to restore the light in response to receiving an imaging ending instruction when the movable platform is in the controlled state.

21. The electronic device of claim 20, wherein controlling the light emitting state of the light emitting module by executing the light control instruction with the highest priority includes:
controlling the light emitting module to return to a state before the light is turned off if the light control instruction instructs to restore the light.

22. The electronic device of claim 21, wherein:
the signal source further includes a remote control module; and
if the light control instruction instructs to restore the light, after controlling the light emitting module to return to the state before the light is turned off, the method further includes:
obtaining a corresponding light control instruction generated by the remote control module based on a light remote control operation; and
controlling the light emitting state of the light emitting module based on a light switch state and the light emitting parameter indicated by the light control instruction.

23. The electronic device of claim 22, wherein:
the signal source further includes a safety control module; and the method further includes:
obtaining the light control instruction generated by the safety control module if the light control instruction generated by the remote control module is unable to obtain, the light control instruction instructing to turn on the light; and
controlling a brightness and/or a blinking frequency of the light emitting module based on the light emitting parameter carried in the light control instruction.

24. The electronic device of claim 13, wherein:
the signal source includes a safety control module, a remote control module, and a camera module;
the safety control module has a highest priority when the movable platform is in the uncontrolled state; and
the camera module has a highest priority, the remote control module has a second priority, and the safety control module has a lowest priority when the movable platform is in the controlled state.

25. A movable platform comprising:
the electronic device according to any one of claims 13 to 24.

26. A UAV light emitting system comprising:
a light emitting control module, and
a light emitting module, a camera module, and a safety control module, connected to the light emitting control module;
the safety control module being configured to determine a controlled state of the UAV based on a received remote control signal; and when the UAV is in an uncontrolled state, send a light control instruction to the light emitting control module instructing to turn on light;
the camera module being configured to send the light control instruction in response to receiving an imaging instruction, and send the light control instruction instructing to restore the light to the light emitting control module in response to receiving an imaging ending instruction; and
the light emitting control module being configured to control a light emitting state of the light emitting module based on the light control instruction sent by the safety control module when the UAV is in the uncontrolled state, and control the light emitting state of the light emitting module based on the light control instruction sent by the camera module when the UAV is in a controlled state.

27. The UAV light emitting system of claim 26 further comprising a remote control module connected to the light emitting control module, wherein:
the remote control module is configured to generate a corresponding light control instruction based on a light remote control operation, and send the light control instruction to the light emitting control module; and
the remote control module is further configured to control the light emitting state of the light emitting module based on the light control instruction sent by the remote control module when the light control instruction instructs to restore the light.

28. A device for controlling a light emitting module, the light emitting module being installed on a movable platform, comprising:
a controlled state determination module configured to determine a controlled state of the movable platform based on a received remote control signal;
a control instruction acquisition module configured to obtain a light control instruction with a highest priority based on priorities of different signal sources configured corresponding to the controlled state, the signal source being used to initiate the light control instruction for controlling the light emitting module; and
a light emitting module control module configured to control a light emitting state of the light emitting module by executing the light control instruction with the highest priority.

29. A computer-readable storage medium comprising:
a computer program stored in the computer-readable storage medium, the computer program being executable by a processor to complete the method for controlling the light emitting module according to any one of claims 1 to 12.
